(19) Europäisches Patentamt
European Patent Office
Office européen des brevets

(11) EP 4 528 904 A1

(12) **EUROPEAN PATENT APPLICATION**
published in accordance with Art. 153(4) EPC

(43) Date of publication:
**26.03.2025 Bulletin 2025/13**

(21) Application number: **23807225.0**

(22) Date of filing: **30.01.2023**

(51) International Patent Classification (IPC):
***H01M 50/426*** *(2021.01)* ***H01G 11/52*** *(2013.01)*
***H01M 50/403*** *(2021.01)* ***H01M 50/414*** *(2021.01)*
***H01M 50/434*** *(2021.01)* ***H01M 50/443*** *(2021.01)*
***H01M 50/449*** *(2021.01)*

(52) Cooperative Patent Classification (CPC):
**H01G 11/52; H01M 50/403; H01M 50/414; H01M 50/426; H01M 50/434; H01M 50/443; H01M 50/449;** Y02E 60/10

(86) International application number:
**PCT/JP2023/002879**

(87) International publication number:
**WO 2023/223607 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.05.2022 JP 2022082442**

(71) Applicant: **DAIKIN INDUSTRIES, LTD.**
**Osaka-shi, Osaka 530-0001 (JP)**

(72) Inventors:
- **Fukushima, Kanta**
**Osaka-Shi, Osaka 530-0001 (JP)**
- **UEDA, Yuki**
**Osaka-Shi, Osaka 530-0001 (JP)**
- **YAMAZAKI, Shigeaki**
**Osaka-Shi, Osaka 530-0001 (JP)**

(74) Representative: **Hoffmann Eitle Patent- und Rechtsanwälte PartmbB**
**Arabellastraße 30**
**81925 München (DE)**

# (54) COMPOSITION, SEPARATOR FOR ELECTROCHEMICAL DEVICE, ELECTROCHEMICAL DEVICE, AND SECONDARY BATTERY

(57) Provided is a composition for coating a separator for an electrochemical device, comprising a copolymer comprising a fluoromonomer unit and an amide bond-containing monomer unit.

EP 4 528 904 A1

## Description

TECHNICAL FIELD

The present disclosure relates to a composition, a separator for an electrochemical device, an electrochemical device, and a secondary battery.

BACKGROUND ART

Patent Document 1 discloses a composite comprising a fluorine-containing copolymer, an alkali metal salt, and an ionic liquid, wherein
the fluorine-containing copolymer essentially comprises:

a structural unit represented by the general formula (1):

$$-[CR^1R^2-CR^3R^4]- \qquad (1)$$

wherein $R^1$ to $R^4$ are each independently H, F, Cl, $CF_3$, or $OR^{10}$,
where $R^{10}$ is an organic group having 1 to 8 carbon atoms,
provided that at least one of $R^1$ to $R^4$ is F; and
a structural unit represented by the general formula (2):

$$-[CR^5R^6-CR^7R^8]- \qquad (2)$$

wherein $R^5$ to $R^8$ are each independently H, F, an alkyl group having 1 to 3 carbon atoms, a functional group containing a heteroatom other than the fluorine atom, or a group containing the functional group, provided that at least one of $R^5$ to $R^8$ is a functional group containing a heteroatom other than the fluorine atom or a group containing the functional group, and the composite has a volatile content of 0.1% by mass or less with respect to the entire composite.

Patent Document 2 discloses a composition characterized by including an inorganic filler, a copolymer of a fluoromonomer and a polymerizable vinyl compound having an amide bond, and a solvent.

Patent Document 3 discloses an organic/inorganic composite porous separator, which comprises: (a) a polyolefin-based separator substrate; and (b) an active layer formed by coating at least one region selected from the group consisting of a surface of the substrate and a part of pores present in the substrate with a mixture of inorganic particles and a binder polymer, wherein the inorganic particles in the active layer are interconnected among themselves by the binder polymer, and spaces among the inorganic particles form a pore structure.

RELATED ART

PATENT DOCUMENTS

Patent Document 1: International Publication No. WO 2021/221113
Patent Document 2: International Publication No. WO 2020/054210
Patent Document 3: Japanese Translation of PCT International Application Publication No. 2008-524824

SUMMARY OF THE INVENTION

PROBLEM TO BE SOLVED BY THE INVENTION

An object of the present disclosure is to provide a composition for coating a separator for an electrochemical device, which can improve the heat shrinkage resistance of the separator.

MEANS FOR SOLVING THE PROBLEM

According to a first aspect of the present disclosure, provided is a composition for coating a separator for an electrochemical device, which contains a copolymer containing a fluoromonomer unit and an amide bond-containing

monomer unit.

EFFECTS OF INVENTION

According to the present disclosure, it is possible to provide a composition for coating a separator for an electrochemical device, which can improve the heat shrinkage resistance of the separator.

DESCRIPTION OF EMBODIMENTS

Hereinafter, specific embodiments of the present disclosure will be described in detail, but the present disclosure is not limited to the following embodiments.

A lithium ion secondary battery has a basic structure in which a non-aqueous electrolyte is disposed between a positive electrode and a negative electrode, via a separator if necessary. The separator is interposed between the positive electrode and the negative electrode to prevent contact between the active materials of both electrodes, and forms an ion conduction path between the electrodes by causing an electrolyte to flow through the pores of the separator. In addition, when an abnormal current flows in the battery due to a cause such as a short circuit between the positive electrode and the negative electrode, the separator is required to have the function of interrupting the current to block an excessive current (shutdown function), and when the normal battery operating temperature is exceeded, the separator closes the microporous membrane to achieve shutdown.

Conventionally, porous membranes such as a microporous polyolefin film formed from polyethylene, polypropylene, or the like have been generally used as separators. However, these polyolefin-based porous membranes have high heat shrinkability, and thus have the problem of low dimensional stability at a high temperature, and when the internal temperature of a lithium ion secondary battery rises even after the pores in the separator are closed by abnormal heating in the battery, this may cause a concern that the separator may undergo heat shrinkage and breakage to cause an internal short circuit, leading to fire or the like. In order to improve the safety of a battery under such a high temperature, there is a demand for improved heat shrinkage resistance of the separator.

The present inventors have carried out extensive studies and found that the heat shrinkage resistance of the separator can be improved by coating the separator with a composition containing a copolymer of a fluoromonomer and an amide bond-containing monomer.

That is, the composition of the present disclosure is a composition for coating a separator for an electrochemical device, which contains a copolymer of a fluoromonomer and an amide bond-containing monomer, and by coating the separator with the composition of the present disclosure, the heat shrinkage resistance of the separator can be improved.

(Copolymer)

The composition of the present disclosure contains a copolymer of a fluoromonomer and an amide bond-containing monomer.

Examples of the fluoromonomer include (1) an olefin having a fluorine atom bonded to an $sp^2$ hybridized carbon atom, (2) a monomer represented by the general formula: $CH_2$=CX-COORf wherein X is Cl, H, or an alkyl group, and Rf is a fluoroalkyl group, (3) a monomer represented by the general formula: $CH_2$=CH-Rf wherein Rf is a fluoroalkyl group, and (4) a monomer represented by the general formula: $CH_2$=CH-ORf wherein Rf is a fluoroalkyl group.

Examples of the alkyl group include an alkyl group having 1 to 3 carbon atoms, and the alkyl group is preferably a methyl group.

The fluoroalkyl group is preferably a linear or branched fluoroalkyl group having 1 to 12 carbon atoms.

The fluoromonomer is preferably (1), and more preferably at least one selected from the group consisting of vinylidene fluoride, trifluoroethylene, tetrafluoroethylene, hexafluoropropylene, chlorotrifluoroethylene, monofluoroethylene, trifluorostyrene, and a fluoromonomer represented by the general formula: $CX_2$=$CXRf^1$ wherein X is independently H or F, at least one of X is F, and $Rf^1$ is a linear or branched fluoroalkyl group having 1 to 12 carbon atoms, from the viewpoint of being able to introduce a fluorine atom bonded to a carbon atom constituting the polymer main chain into the copolymer and thereby being able to further improve the heat shrinkage resistance of the separator when the separator is coated.

The fluoromonomer is further preferably at least one selected from the group consisting of tetrafluoroethylene, hexafluoropropylene, chlorotrifluoroethylene, and 2,3,3,3-tetrafluoropropene, and particularly preferably tetrafluoroethylene, from the viewpoint of being able to much further improve the heat shrinkage resistance of the separator when the separator is coated.

The amide bond-containing monomer contains an amide bond and a polymerizable vinyl group. The amide bond refers to a bond between a carbonyl group and a nitrogen atom. Examples of the polymerizable vinyl group include a vinyl group, an allyl group, a vinyl ether group, a vinyl ester group, and an acrylic group.

Examples of the amide bond-containing monomer include an N-vinyllactam compound such as N-vinyl-β-propiolactam, N-vinyl-2-pyrrolidone, N-vinyl-2-piperidone, or N-vinyl-heptolactam, an acyclic N-vinylamide compound such as N-vinylformamide or N-methyl-N-vinylacetamide, an acyclic N-allylamide compound such as N-allyl-N-methylformamide or allylurea, an N-allyllactam compound such as 1-(2-propenyl)-2-pyrrolidone, and an acrylamide compound such as (meth)acrylamide, N,N-dimethylacrylamide, or N-isopropylacrylamide.

In addition, examples of the amide bond-containing monomer also include

a compound represented by

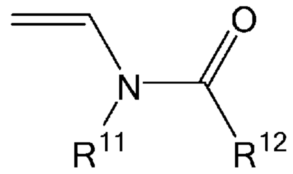

wherein $R^{11}$ and $R^{12}$ are each independently H or an alkyl group having 1 to 10 carbon atoms, and
a compound represented by

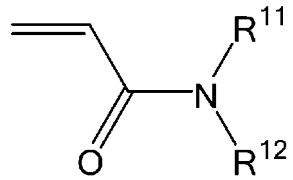

wherein $R^{11}$ and $R^{12}$ are each independently H or an alkyl group having 1 to 10 carbon atoms.

The amide bond-containing monomer is preferably a monomer having a lactam ring. The lactam ring is not limited as long as it is a ring formed by amide bond and carbon atoms, and the lactam ring may be monocyclic or polycyclic, and is preferably monocyclic. In addition, the lactam ring may have any substituent. Examples of the lactam ring include an α-lactam ring, a β-lactam ring, a γ-lactam ring, a δ-lactam ring, an ε-caprolactam ring, and an ω-heptalactam.

The amide bond-containing monomer can have a structure in which the remaining atomic group obtained by removing one or more hydrogen atoms bonded to a carbon atom or a nitrogen atom that forms a lactam ring is directly or indirectly bonded to a polymerizable vinyl group. For example, the amide bond-containing monomer can have a structure in which the remaining atomic group obtained by removing one or more hydrogen atoms bonded to a carbon atom or a nitrogen atom that forms a lactam ring is bonded to a vinyl group or an allyl group.

The amide bond-containing monomer is, among others, preferably at least one selected from the group consisting of N-vinyl-β-propiolactam, N-vinyl-2-pyrrolidone, N-vinyl-2-piperidone, N-vinyl-ε-caprolactam, and N-vinyl-heptolactam, more preferably at least one selected from the group consisting of N-vinyl-2-pyrrolidone, N-vinyl-2-piperidone, and N-vinyl-ε-caprolactam, and further preferably N-vinyl-2-pyrrolidone.

The copolymer may contain an other monomer unit, in addition to a fluoromonomer unit and an amide bond-containing monomer unit. The other monomer is not limited as long as it is a monomer copolymerizable with a fluoromonomer and an amide bond-containing monomer. Examples of the other monomer unit include a vinyl ester monomer unit, a vinyl ether monomer unit, a (meth)acrylic monomer unit having polyethylene glycol in a side chain thereof, a vinyl monomer unit having polyethylene glycol in a side chain thereof, a (meth)acrylic monomer unit having a long-chain hydrocarbon group, and a vinyl monomer unit having a long-chain hydrocarbon group.

The content of the fluoromonomer unit in the copolymer is preferably 75 to 7 mol% based on all monomer units, and the content of the amide bond-containing monomer unit in the copolymer is preferably 25 to 93 mol% based on all monomer units.

The content of the fluoromonomer unit in the copolymer is more preferably 60 mol% or less, further preferably 55 mol% or less, particularly preferably 50 mol% or less, and most preferably 45 mol% or less, and is more preferably 15 mol% or more, further preferably 20 mol% or more, particularly preferably 35 mol% or more, and most preferably 40 mol% or more.

The content of the amide bond-containing monomer unit in the copolymer is more preferably 40 mol% or more, further preferably 45 mol% or more, particularly preferably 50 mol% or more, and most preferably 55 mol% or more, and is more preferably 85 mol% or less, further preferably 80 mol% or less, particularly preferably 65 mol% or less, and most preferably 60 mol% or less.

The content of the other monomer unit in the copolymer is preferably 50 mol% or less, more preferably 35 mol% or less, further preferably 25 mol% or less, even further preferably 15 mol% or less, and particularly preferably 5 mol% or less,

and is preferably 0 mol% or more.

In addition, in some embodiments, the copolymer may be a copolymer containing substantially only a fluoromonomer unit and an amide bond-containing monomer unit.

The formulation of the copolymer can be measured, for example, by $^1$H-NMR and $^{19}$F-NMR.

The weight average molecular weight, in terms of polystyrene, of the copolymer is preferably 10,000 to 500,000, and is more preferably 15,000 or more, further preferably 20,000 or more, and particularly preferably 30,000 or more, and is more preferably 400,000 or less. The weight average molecular weight can be measured by gel permeation chromatography (GPC) using dimethylformamide as a solvent.

(Method for producing copolymer)

The copolymer can be suitably produced by a production method involving polymerizing a fluoromonomer, an amide bond-containing monomer, and, if necessary, an other monomer in a reactor.

Examples of the polymerization method that can be adopted include a method such as suspension polymerization, emulsion polymerization, or solution polymerization.

In addition, among various polymerization methods, a polymerization method using a fluorine-containing solvent is preferable from the viewpoint of being able to produce a copolymer having a high molecular weight. The copolymer can be suitably produced, for example, by a production method involving polymerizing at least a fluoromonomer and an amide bond-containing monomer in a fluorine-containing solvent to obtain a copolymer.

Examples of the fluorine-containing solvent include a hydrochlorofluoroalkane such as $CH_3CClF_2$, $CH_3CCl_2F$, $CF_3CF_2CCl_2H$, or $CF_2ClCF_2CFHCl$; a chlorofluoroalkane such as $CF_2ClCFClCF_2CF_3$ or $CF_3CFClCFClCF_3$; a perfluoroalkane such as perfluorocyclobutane, $CF_3CF_2CF_2CF_3$, $CF_3CF_2CF_2CF_2CF_3$, or $CF_3CF_2CF_2CF_2CF_2CF_3$; a hydrofluorocarbon such as $CF_2HCF_2CF_2CF_2H$, $CF_3CFHCF_2CF_2CF_3$, $CF_3CF_2CF_2CF_2CF_2H$, $CF_3CF_2CFHCF_2CF_3$, $CF_3CFHCFHCF_2CF_3$, $CF_2HCF_2CF_2CF_2CF_2H$, $CF_2HCFHCF_2CF_2CF_3$, $CF_3CF_2CF_2CF_2CF_2CF_2H$, $CF_3CH(CF_3)CF_2CF_2CF_3$, $CF_3CF(CF_3)CFHCF_2CF_3$, $CF_3CF(CF_3)CFHCFHCF_3$, $CF_3CH(CF_3)CFHCF_2CF_3$, $CF_2HCF_2CF_2CF_2CF_2CF_2H$, $CF_3CF_2CF_2CF_2CH_2CH_3$, or $CF_3CH_2CF_2CH_3$; a (perfluoroalkyl) alkyl ether such as $F(CF_2)_4OCH_3$, $F(CF_2)_4OC_2H_5$, $(CF_3)_2CFOCH_3$, or $F(CF_2)_3OCH_3$; and a hydrofluoroalkyl ether such as $CF_3CH_2OCF_2CHF_2$, $CHF_2CF_2CH_2OCF_2CHF_2$, or $CF_3CF_2CH_2OCF_2CHF_2$.

The fluorine-containing solvent is preferably at least one selected from the group consisting of a hydrofluorocarbon, a (perfluoroalkyl)alkyl ether, and a hydrofluoroalkyl ether, and more preferably a hydrofluoroalkyl ether, from the viewpoint of being able to produce a copolymer having a much higher molecular weight.

The fluorine-containing solvent is, among those, preferably at least one selected from the group consisting of $CF_3CH_2CF_2CH_3$, $CF_3CH_2OCF_2CHF_2$, $CHF_2CF_2CH_2OCF_2CHF_2$, and $CF_3CF_2CH_2OCF_2CHF_2$, and more preferably $CF_3CH_2OCF_2CHF_2$.

In the polymerization, a polymerization initiator, a surfactant and a chain transfer agent can be used, and may each be a conventionally known one.

The polymerization initiator may be a radical polymerization initiator. Representative examples of the polymerization initiator include

a dialkyl peroxycarbonate such as di-n-propyl peroxydicarbonate, diisopropyl peroxydicarbonate, or di-sec-butyl peroxydicarbonate;
a peroxyester such as t-butyl peroxyisobutyrate, t-butyl peroxypivalate, t-hexyl peroxy 2-ethylhexanoate, t-butyl peroxy-2-ethylhexanoate, 1,1,3,3-tetramethylbutyl peroxy-2-ethylhexanoate, or t-amyl peroxypivalate;
a dialkyl peroxide such as di-t-butyl peroxide; and
a di[fluoro(or fluorochloro)acyl] peroxide.

Examples of the di[fluoro(or fluorochloro)acyl] peroxide include a diacyl peroxide represented by $[(RfCOO)-]_2$ wherein Rf is a perfluoroalkyl group, an ω-hydroperfluoroalkyl group, or a fluorochloroalkyl group.

Examples of the di[fluoro(or fluorochloro)acyl] peroxide include di(ω-hydro-dodecafluoroheptanoyl) peroxide, di(ω-hydro-tetradecafluorooctanoyl) peroxide, di(ω-hydrohexadecafluorononanoyl) peroxide, di(perfluorobutyryl) peroxide, di(perfluoropaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl) peroxide, di(trichlorooctafluorohexanoyl) peroxide, di(tetrachloroundecafluorooctanoyl)peroxide, di(pentachlorotetradecafluorodecanoyl)peroxide, and di(undecachlorotriacontafluorodocosanoyl)peroxide.

By polymerization in the presence of a chain transfer agent, the solution viscosity, the weight average molecular

weight, or the like of the resulting copolymer can be appropriately adjusted. Examples of the chain transfer agent include a hydrocarbon such as ethane, isopentane, n-hexane, or cyclohexane; an aromatic such as toluene or xylene; a ketone such as acetone; an acetate ester such as ethyl acetate or butyl acetate; an alcohol such as methanol or ethanol; a mercaptan such as methyl mercaptan; and a halogenated hydrocarbon such as carbon tetrachloride, chloroform, methylene chloride, or methyl chloride.

The polymerization temperature is not limited, and is preferably 0 to 95°C, and more preferably 15 to 95°C, from the viewpoint of the polymerization rate and the cost required for temperature control.

The polymerization pressure is not limited, and is preferably 0.3 to 1.5 MPaG, and is more preferably 0.4 MPaG or more, and is more preferably 1.0 MPaG or less, from the viewpoint of the polymerization rate and the pressure resistance of the reactor.

After completion of the polymerization, when a copolymer is obtained as a slurry, the copolymer can be recovered by taking out the slurry from the reactor and washing and drying the slurry.

(Inorganic filler)

The composition of the present disclosure preferably further contains an inorganic filler. By containing an inorganic filler in the composition of the present disclosure, the heat shrinkage resistance of the separator can be further improved.

The inorganic filler is preferably an inorganic filler containing at least one element selected from the group consisting of Mg, Al, Si, Ti, Zr, and Ba.

The inorganic filler is preferably at least one selected from the group consisting of a metal oxide particle and a metal hydroxide particle. In addition, the inorganic filler is more preferably a metal oxide particle containing at least one element selected from the group consisting of Mg, Al, Si, Ti, Zr, and Ba.

The metal oxide particle is preferably at least one selected from the group consisting of magnesium oxide, silicon oxide, aluminum oxide, barium oxide, zirconium oxide, and titanium oxide.

The metal hydroxide particle is preferably at least one selected from the group consisting of magnesium hydroxide, aluminum hydroxide, and zirconium hydroxide.

The inorganic filler is, among those, preferably at least one selected from the group consisting of magnesium oxide, silicon oxide, aluminum oxide, and zirconium oxide, and more preferably at least one selected from the group consisting of magnesium oxide and aluminum oxide.

The average particle size of the inorganic filler is preferably 25 μm or less, more preferably 10 μm or less, further preferably 5 μm or less, particularly preferably 1 μm or less, and preferably 0.02 μm or more. The average particle size of the inorganic filler is a value obtained by measurement using a transmission electron microscope, a laser type particle size distribution measurement apparatus, or the like.

In the composition of the present disclosure, the content proportion of the copolymer to the inorganic filler [(copolymer)/(inorganic filler)] in terms of mass ratio is preferably 0.1/99.9 to 49.9/50.1, and is more preferably 1/99 or more, further preferably 5/95 or more, and particularly preferably 10/90 or more, and is more preferably 45/55 or less, and further preferably 40/60 or less.

(Solvent)

The composition of the present disclosure preferably further contains a solvent.

Examples of the solvent include water; a nitrogen-containing organic solvent such as N-methyl-2-pyrrolidone, N,N-dimethylacetamide, or dimethylformamide; a ketone-based solvent such as acetone, methyl ethyl ketone, cyclohexanone, or methyl isobutyl ketone; an ester-based solvent such as ethyl acetate or butyl acetate; an ether-based solvent such as tetrahydrofuran, dioxane, ethyl cellosolve, methyl cellosolve, diglyme, or triglyme; an aromatic hydrocarbon-based solvent such as xylene, toluene, or solvent naphtha; an aliphatic hydrocarbon-based solvent such as n-pentane, n-hexane, n-heptane, n-octane, n-nonane, n-decane, n-undecane, n-dodecane, or mineral spirit; and mixed solvents thereof.

In addition, the solvent may also be at least one selected from the group consisting of an ester (1) represented by a general formula (1) and a ketone (2) represented by a general formula (2).

General formula (1):

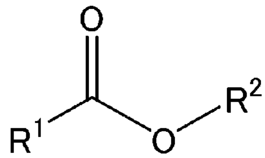

wherein $R^1$ and $R^2$ are each independently H, a $C_1$ to $C_{10}$ linear or branched aliphatic group, or a $C_6$ to $C_{10}$ aromatic group.

General formula (2):

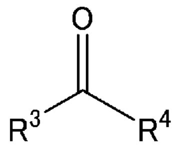

wherein $R^3$ and $R^4$ are each independently H, a $C_1$ to $C_{10}$ linear or branched aliphatic group, or a $C_6$ to $C_{10}$ aromatic group.

$R^1$ and $R^2$ in the general formula (1) are each independently H, a $C_1$ to $C_{10}$ linear or branched aliphatic group, or a $C_6$ to $C_{10}$ aromatic group.

The number of carbon atoms in the aliphatic group for $R^1$ is 1 to 10, and is preferably 2 or more, and more preferably 3 or more, and is preferably 7 or less, and more preferably 5 or less. The aliphatic group for $R^1$ is preferably an alkyl group. The alkyl group may be linear in some embodiments, or branched in other embodiments.

The number of carbon atoms in the aromatic group for $R^1$ is 6 to 10. A hydrogen atom bonded to a carbon atom of an aromatic ring of the aromatic group may or may not be replaced. Examples of the substituent include an alkyl group such as a methyl group, and a halo group such as a chlorine atom. The aromatic group for $R^1$ is preferably a phenyl group or a benzyl group.

$R^1$ is preferably a $C_1$ to $C_{10}$ linear or branched aliphatic group, more preferably a $C_1$ to $C_{10}$ linear or branched alkyl group or a $C_2$ to $C_{10}$ linear or branched alkenyl group, preferably a methyl group, an ethyl group, a propyl group, a vinyl group, an isopropenyl group, a butyl group, or a pentyl group, and more preferably a propyl group, a butyl group, or a pentyl group. These groups may be linear in some embodiments or branched in other embodiments, and are preferably linear.

The number of carbon atoms in the aliphatic group for $R^2$ is 1 to 10, and is preferably 3 or more, and more preferably 4 or more, and is preferably 8 or less, and more preferably 6 or less. The aliphatic group for $R^2$ is preferably an alkyl group. The alkyl group may be linear in some embodiments, or branched in other embodiments.

The number of carbon atoms in the aromatic group for $R^2$ is 6 to 10. A hydrogen atom bonded to a carbon atom of an aromatic ring of the aromatic group may or may not be replaced. Examples of the substituent include an alkyl group such as a methyl group, and a halo group such as a chlorine atom. The aromatic group for $R^2$ is preferably a phenyl group or a benzyl group.

$R^2$ is preferably a $C_1$ to $C_{10}$ linear or branched aliphatic group, more preferably a $C_1$ to $C_{10}$ linear or branched alkyl group, preferably a methyl group, an ethyl group, a propyl group, a butyl group, a pentyl group, or a hexyl group, and more preferably a butyl group, a pentyl group, or a hexyl group. These groups may be linear in some embodiments or branched in other embodiments, and are preferably linear.

The ester (1) represented by the general formula (1) is preferably at least one selected from the group consisting of ethyl acetate, ethyl butyrate, butyl methacrylate, propyl propionate, ethyl butyrate, butyl butyrate, butyl pentanoate, butyl hexanoate, pentyl butyrate, pentyl pentanoate, pentyl hexanoate, hexyl butyrate, hexyl pentanoate, and hexyl hexanoate, and more preferably butyl butyrate.

$R^3$ and $R^4$ in the general formula (2) are each independently H, a $C_1$ to $C_{10}$ linear or branched aliphatic group, or a $C_6$ to $C_{10}$ aromatic group.

The number of carbon atoms in the aliphatic group for $R^3$ and $R^4$ is 1 to 10, preferably 3 or less, and more preferably 2 or less. The aliphatic group for $R^3$ is preferably an alkyl group. The alkyl group may be linear in some embodiments, or branched in other embodiments.

The number of carbon atoms in the aromatic group for $R^3$ and $R^4$ is 6 to 10. A hydrogen atom bonded to a carbon

atom of an aromatic ring of the aromatic group may or may not be replaced. Examples of the substituent include an alkyl group such as a methyl group, and a halo group such as a chlorine atom. The aromatic group for $R^3$ and $R^4$ is preferably a phenyl group or a benzyl group.

$R^3$ and $R^4$ are each preferably a $C_1$ to $C_{10}$ linear or branched aliphatic group, more preferably a $C_1$ to $C_{10}$ linear or branched alkyl group, preferably a methyl group, an ethyl group, a propyl group, a butyl group, a pentyl group, or a hexyl group, and more preferably a methyl group or an ethyl group. These groups may be linear in some embodiments or branched in other embodiments, and are preferably linear.

The ketone (2) represented by the general formula (2) is preferably at least one selected from the group consisting of acetone and methyl ethyl ketone.

The solvent may also be water. For example, when a copolymer is produced by a production method involving emulsion polymerizing a monomer in water, a polymer composition containing a copolymer and water is usually obtained, and thus water included in the polymerization composition can be used as a solvent for the composition of the present disclosure.

The composition of the present disclosure, among others, preferably contains at least one selected from the group consisting of N-methyl-2-pyrrolidone, N,N-dimethylacetamide, dimethylformamide, dimethylsulfoxide, acetone, and methyl ethyl ketone, and more preferably contains N-methyl-2-pyrrolidone, from the viewpoint of excellent stability and applicability of the composition.

When the composition of the present disclosure contains a copolymer and a solvent, the content of the copolymer is preferably 0.1 to 20% by mass, and is more preferably 1% by mass or more, further preferably 3% by mass or more, particularly preferably 10% by mass or more, and most preferably 13% by mass or more, and is more preferably 16% by mass or less, based on the mass of the composition.

(Other component)

The composition of the present disclosure may also contain an organic filler. The organic filler is preferably a non-conductive crosslinked polymer, and more preferably crosslinked polystyrene, crosslinked polymethacrylate, or crosslinked acrylate.

The composition of the present disclosure may also contain an other polymer such as polyacrylate, polymethacrylate, polyacrylonitrile, polyamideimide, acrylic elastomer, a carboxyalkylcellulose, an alkylcellulose, or a hydroxyalkylcellulose.

(Separator for electrochemical device)

A separator for an electrochemical device can be created by using the composition of the present disclosure. The separator for an electrochemical device according to the present disclosure includes a substrate and a coating layer formed from the composition.

The substrate and the coating layer may be directly adhered or may be adhered via an other layer, and the coating layer is preferably formed directly on the substrate. A coating layer may be provided only on one side of the substrate, or may be provided on each of both sides thereof. In addition, a coating layer may be provided in such a way as to cover the entire substrate on which the coating layer is to be provided, or may be provided in such a way as to cover only a part of the substrate.

When a coating layer is formed only on one side of the substrate, the weight of the coating layer is preferably in the range of 0.5 to 50.0 $g/m^2$ from the viewpoint of the heat shrinkage resistance, the adhesion to an electrode, and the ion conductivity. When a coating layer is formed on each of both sides of the substrate, the weight of the coating layer is preferably 1.0 $g/m^2$ or more, and more preferably 3.0 $g/m^2$ or more, and is preferably 25.0 $g/m^2$ or less, and more preferably 20.0 $g/m^2$ or less.

The thickness of the coating layer per side is preferably 1 to 5 $\mu$m. When the thickness of the coating layer is within the above range, it is possible to ensure the membrane breaking strength and the insulation, and the curling of the substrate is unlikely to increase.

The substrate is preferably a porous substrate having a pore or a void inside. Examples of the porous substrate include a microporous film, a porous sheet formed from a fibrous material such as a nonwoven fabric or a paper-like sheet, or a composite coating layer obtained by laminating one or more other porous layers on such a microporous film or porous sheet. The microporous membrane means a membrane that has a large number of micropores inside and has a structure in which these micropores are connected, allowing a gas or a liquid to pass therethrough from one side to the other side.

The material that constitutes the substrate may be an organic material or an inorganic material having electrical insulation. In particular, from the viewpoint of imparting a shutdown function to the substrate, the constituent material of the substrate is preferably an organic material, more preferably a thermoplastic resin, and further preferably at least one selected from the group consisting of polyethylene, polypropylene, polyimide, polyamide, polyamideimide, polyethylene

terephthalate, polyester, and polyacetal.

The shutdown function refers to a function that, when the battery temperature rises, melts the thermoplastic resin to close the pores of the substrate and thereby block the movement of ions, preventing thermal runaway of the battery. The thermoplastic resin is suitably a thermoplastic resin having a melting point of less than 200°C, and particularly preferably a polyolefin.

A substrate using a polyolefin is suitably a polyolefin microporous membrane. The polyolefin microporous membrane may be a polyolefin microporous membrane that has sufficient mechanical physical characteristics and ion permeability and is applied to a conventional separator for a non-aqueous secondary battery. Then, the polyolefin microporous membrane preferably includes polyethylene from the viewpoint of having the shutdown function described above.

The weight average molecular weight of the polyolefin is suitably 100,000 to 5,000,000. If the weight average molecular weight is less than 100,000, it may be difficult to ensure sufficient mechanical physical characteristics. In addition, if the weight average molecular weight is more than 5,000,000, the shutdown characteristics may deteriorate and forming may become difficult.

Such a polyolefin microporous membrane can be produced, for example, by the following method. That is, examples of a method for producing the same include a method for forming a microporous membrane, including sequentially carrying out (i) extruding a molten polyolefin resin from a T-die to form a sheet, (ii) subjecting the sheet to a crystallization treatment, (iii) stretching the sheet, and (iv) heat-treating the sheet. In addition, examples thereof also include a method for forming a microporous membrane, including sequentially carrying out (i) melting a polyolefin resin together with a plasticizer such as liquid paraffin, extruding the molten resin from a T-die, and cooling the same to form a sheet, (ii) stretching the sheet, (iii) extracting the plasticizer from the sheet, and (iv) heat-treating the sheet.

The porous sheet formed from a fibrous material may be a porous sheet formed from a fibrous material made of a polyester such as polyethylene terephthalate, a polyolefin such as polyethylene or polypropylene, a heat-resistant polymer such as an aromatic polyamide or polyimide, polyethersulfone, polysulfone, polyetherketone, or polyetherimide, or the like, or from a mixture of such fibrous materials.

In some embodiments, the substrate may be a composite substrate having a functional layer further laminated. The composite substrate is preferable in that the functional layer allows a further function to be added. For example, from the viewpoint of imparting heat resistance, the functional layer may be a porous layer formed from a heat-resistant resin or a porous layer formed from a heat-resistant resin and an inorganic filler. Examples of the heat-resistant resin include one or two or more heat-resistant polymers selected from an aromatic polyamide, polyimide, polyethersulfone, polysulfone, polyetherketone, and polyetherimide. Examples of the inorganic filler that can be suitably used include a metal oxide such as alumina, and a metal hydroxide such as magnesium hydroxide. Examples of a method for composite formation include a method involving coating a porous sheet with a functional layer, a method involving joining with an adhesive, and a method for thermocompression bonding.

The substrate is, among those described above, preferably a porous substrate formed from at least one selected from the group consisting of polyethylene, polypropylene, polyimide, polyamide, polyethylene terephthalate, polyester, and polyacetal.

From the viewpoint of obtaining good mechanical physical characteristics and internal resistance, the film thickness of the substrate is preferably in the range of 5 to 50 μm. The upper limit of the film thickness is more preferably 40 μm, and further preferably 30 μm. In addition, the lower limit of the film thickness is more preferably 10 μm.

The Gurley value of the substrate is preferably 500 sec/100 cc Air or less, and more preferably 300 sec/100 cc Air or less. The Gurley value thereof is also preferably 50 sec/100 cc Air or more. The Gurley value is a value obtained by measurement with a Gurley densometer according to JIS P 8117.

The porosity of the substrate is preferably 30 to 70%, and more preferably 35 to 60%. The porosity is a value calculated by the following expression.

$$\text{Porosity} = (1 - \text{sample mass (g)}/(\text{sample density (g/cm}^3) \times \text{sample volume (cm}^3))) \times 100$$

The sample volume ($cm^3$) here is calculated by 10 cm × 10 cm × thickness (cm).

The average pore size of the substrate is preferably 0.01 to 0.5 μm, and more preferably 0.1 to 0.3 μm. The average pore size is determined as follows: a BET gas adsorption method is applied to measure the specific surface area ($m^2/g$) of the substrate, and this is multiplied by the basis weight ($g/m^2$) of the substrate to calculate the pore surface area S per $m^2$ of the substrate. Separately, the pore volume V per $m^2$ of the substrate is calculated from the porosity. By using the obtained values, the average pore size (diameter) d is calculated from the following expression.

$$d = 4 \cdot V/S$$

When the Gurley value, the porosity, and the average pore size of the substrate are within the above ranges, a separator having excellent ion permeability can be obtained, and a battery having good charge/discharge characteristics can be obtained.

The separator for an electrochemical device can be produced by coating a substrate with the composition. The coating method is not limited as long as it is a method that can cover a surface of a substrate with a coating layer formed from a composition, and examples thereof include a method involving coating a substrate with the composition and drying the resulting coating film. More specific examples of the coating method include a method involving roll coating a substrate with the composition, a method involving dipping a substrate in the composition, and a method involving applying the composition onto a substrate and immersing the substrate in an appropriate coagulating liquid for creation. In addition, a separator for an electrochemical device may be produced by creating a film by using the composition and laminating the obtained film and a substrate by a method such as lamination. Examples of a method for creating a film by using the composition include a method involving casting the composition onto a film having a smooth surface such as a polyester film or an aluminum film and then peeling off the film.

The air permeability of the separator for an electrochemical device is preferably 1000 s/100 mL or less, more preferably 800 s/100 mL or less, and further preferably 500 s/100 mL or less, and is preferably 50 s/100 mL or more. Air permeability can be measured by using an air permeability tester.

The Gurley value of the separator for an electrochemical device is preferably 1000 sec/100 cc Air or less, more preferably 800 sec/100 cc Air or less, and further preferably 500 sec/100 cc Air or less. The Gurley value thereof is also preferably 50 sec/100 cc Air or more. The Gurley value is a value obtained by measurement with a Gurley densometer according to JIS P 8117.

In the separator for an electrochemical device, the Gurley value increase rate is preferably 500% or less, more preferably 400% or less, and further preferably 250% or less. The Gurley value increase rate is also preferably 103% or more. The Gurley value increase rate can be determined from the following expression.

Gurley value increase rate (%) = (Gurley value of separator for electrochemical device/Gurley value of substrate only) $\times$ 100

(Electrochemical device)

The separator for an electrochemical device according to the present disclosure can be applied to an electrochemical device. The electrochemical device of the present disclosure includes the separator for an electrochemical device described above.

Examples of the electrochemical device include a battery such as a secondary battery or a capacitor. The battery may be a primary battery in some embodiments, and may be a storage battery (secondary battery) or an energy storage element in other embodiments. In some embodiments, the battery may be a non-aqueous electrolyte battery. The non-aqueous electrolyte battery includes all batteries including an electrolyte and a power generation element. Examples of the non-aqueous electrolyte battery include a lithium ion primary battery, a lithium ion secondary battery, a nickel hydrogen battery, a lithium ion capacitor, and an electric double layer capacitor.

The separator for an electrochemical device according to the present disclosure can constitute a secondary battery together with a positive electrode, a negative electrode, and a non-aqueous electrolyte. The secondary battery is, among others, particularly preferably a lithium ion secondary battery. Hereinafter, representative configurations when the separator for an electrochemical device according to the present disclosure is applied to a lithium ion secondary battery will be described, but the electrochemical device of the present disclosure is not limited to these configurations.

The positive electrode is composed of a positive electrode mixture including a positive electrode active material, which is a material of the positive electrode, and a current collector.

The positive electrode active material is not limited as long as it can electrochemically absorb and desorb a lithium ion. The positive electrode active material is preferably a substance containing lithium and at least one transition metal, and examples thereof include a lithium transition metal composite oxide such as a lithium-cobalt composite oxide, a lithium-nickel composite oxide, or a lithium-manganese composite oxide, and a lithium-containing transition metal phosphate compound.

The positive electrode mixture preferably further includes a binder, a thickener, and a conductive material.

The binder may be any material as long as the material is safe against the solvent and the electrolyte that are used when producing an electrode, and examples thereof include polyvinylidene fluoride, polytetrafluoroethylene, a vinylidene fluoride-tetrafluoroethylene copolymer, a vinylidene fluoride-hexafluoropropylene copolymer, a vinylidene fluoride-tetrafluoroethylene-hexafluoropropylene copolymer, polyethylene, polypropylene, styrene-butadiene elastomer, isoprene elastomer, butadiene elastomer, an ethylene-acrylic acid copolymer, and an ethylene-methacrylic acid copolymer.

Examples of the thickener include carboxymethylcellulose, methylcellulose, hydroxymethylcellulose, ethylcellulose, polyvinyl alcohol, oxidized starch, phosphorylated starch, and casein.

Examples of the conductive material for a positive electrode include a carbon material such as graphite, carbon black, a carbon nanotube, or a carbon fiber.

Examples of a material for a current collector for a positive electrode include a metal such as aluminum, titanium, or tantalum, and an alloy thereof. Among these, aluminum or an alloy thereof is preferable.

The positive electrode may be produced according to a conventional method. Examples thereof include a method involving adding a binder, a thickener, a conductive material, a solvent, or the like as described above to the positive electrode active material to form a slurry-like positive electrode mixture, applying the mixture to a current collector, drying the mixture, and then pressing the mixture to achieve high density.

The negative electrode is composed of a negative electrode mixture including a negative electrode material and a current collector.

Examples of the negative electrode material include a carbonaceous material that can absorb and desorb a lithium ion, such as a pyrolysate of an organic substance under various pyrolysis conditions, artificial graphite, or natural graphite; a metal oxide material that can absorb and desorb a lithium ion, such as tin oxide or silicon oxide; a lithium metal; and various lithium alloys. Two or more of these negative electrode materials may be mixed and used.

The carbonaceous material that can absorb and desorb a lithium ion is preferably artificial graphite or purified natural graphite produced by high-temperature treatment of graphitizable pitch obtained from various raw materials, or a material obtained by surface-treating such graphite with pitch or an other organic substance and then carbonizing the resulting graphite.

The negative electrode mixture preferably further includes a binder, a thickener, and a conductive material. Examples of the binder include the same binders as those that can be used for the positive electrode described above. Examples of the thickener include the same thickeners as those that can be used for the positive electrode described above. Examples of the conductive material for a negative electrode include a metal material such as copper or nickel; and a carbon material such as graphite or carbon black.

Examples of a material for a current collector for a negative electrode include copper, nickel, and stainless steel. Among these, copper is preferable from the viewpoint of ease of processing into a thin film and the cost.

The negative electrode may be produced according to a conventional method. Examples thereof include a method involving adding a binder, a thickener, a conductive material, a solvent, or the like as described above to the negative electrode material to form a slurry, applying the slurry to a current collector, drying the slurry, and then pressing the slurry to achieve high density.

The non-aqueous electrolyte may be a solution obtained by dissolving a known electrolyte salt in a known organic solvent for electrolyte salt dissolution.

The organic solvent for electrolyte salt dissolution is not limited, and may be one or two or more of a hydrocarbon-based solvent such as propylene carbonate, ethylene carbonate, butylene carbonate, γ-butyl lactone, 1,2-dimethoxyethane, 1,2-diethoxyethane, dimethyl carbonate, diethyl carbonate, ethyl methyl carbonate, or vinylene carbonate; and a fluorine-based solvent such as fluoroethylene carbonate, fluoroether, or fluorinated carbonate.

Examples of the electrolyte salt include $LiClO_4$, $LiAsF_6$, $LiBF_4$, $LiPF_6$, LiCl, LiBr, $CH_3SO_3Li$, $CF_3SO_3Li$, $LiN(SO_2CF_3)_2$, $LiN(SO_2C_2F_5)_2$, and cesium carbonate.

The concentration of the electrolyte salt is preferably 0.8 mol/liter or more, and more preferably 1.0 mol/liter or more. The upper limit thereof depends on the organic solvent for electrolyte salt dissolution, and is usually 1.5 mol/liter.

The lithium ion secondary battery may have any shape, and examples thereof include a shape such as a cylindrical shape, a square shape, a laminated shape, a coin shape, or a large-sized shape. The shapes and the configurations of a positive electrode, a negative electrode, and a separator can be changed according to the shape of each battery and used.

The embodiments have been described above, and it will be understood that various modifications of the embodiments and details are possible without departing from the spirit and scope of the claims.

<1> According to a first aspect of the present disclosure, provided is a composition for coating a separator for an electrochemical device, comprising a copolymer comprising a fluoromonomer unit and an amide bond-containing monomer unit.

<2> According to a second aspect of the present disclosure, provided is
the composition according to the first aspect, wherein the fluoromonomer is at least one selected from the group consisting of tetrafluoroethylene, hexafluoropropylene, chlorotrifluoroethylene, and 2,3,3,3-tetrafluoropropene.

<3> According to a third aspect of the present disclosure, provided is
the composition according to the first or second aspect, wherein the amide bond-containing monomer comprises a lactam ring.

<4> According to a fourth aspect of the present disclosure, provided is the composition according to any one of the first to third aspects, wherein the amide bond-containing monomer is N-vinyl-2-pyrrolidone.

<5> According to a fifth aspect of the present disclosure, provided is the composition according to any one of the first to

fourth aspects, wherein a content of the fluoromonomer unit in the copolymer is 75 to 7 mol% based on all monomer units, and a content of the amide bond-containing monomer unit in the copolymer is 25 to 93 mol% based on all monomer units.

<6> According to a sixth aspect of the present disclosure, provided is the composition according to any one of the first to fifth aspects, further comprising an inorganic filler.

<7> According to a seventh aspect of the present disclosure, provided is the composition according to any one of the first to sixth aspects, further comprising an inorganic filler comprising at least one element selected from the group consisting of Mg, Al, Si, Ti, Zr, and Ba.

<8> According to an eighth aspect of the present disclosure, provided is the composition according to any one of the first to seventh aspects, wherein the composition further comprises an inorganic filler, and a content proportion of the copolymer to the inorganic filler, (copolymer): (inorganic filler), in terms of mass ratio is 0.1:99.9 to 49.9:50.1.

<9> According to a ninth aspect of the present disclosure, provided is the composition according to any one of the first to eighth aspects, further comprising a solvent.

<10> According to a tenth aspect of the present disclosure, provided is a separator for an electrochemical device, comprising a substrate and a coating layer formed from the composition according to any one of the first to ninth aspects.

<11> According to an eleventh aspect of the present disclosure, provided is the separator for an electrochemical device according to the tenth aspect, wherein the substrate is formed of an organic material.

<12> According to a twelfth aspect of the present disclosure, provided is an electrochemical device comprising the separator for an electrochemical device according to the tenth or eleventh aspect.

<13> According to a thirteenth aspect of the present disclosure, provided is a secondary battery comprising the separator for an electrochemical device according to the tenth or eleventh aspect.

## EXAMPLES

Next, the embodiments of the present disclosure will be described with reference to Examples, but the present disclosure is not limited only to the Examples.

The numerical values in the Examples were measured by the following methods.

<Monomer formulation of polymer>

The monomer formulation of a polymer was measured in the state of a deuterated chloroform solution of the polymer by $^{1}H$-NMR and $^{19}F$-NMR measurements by using an NMR analyzer (manufactured by Agilent Technologies, VNS 400 MHz).

<Weight average molecular weight>

The weight average molecular weight was measured by gel permeation chromatography (GPC). The weight average molecular weight was calculated from data (reference: polystyrene) obtained by measurement under a flow of dimethylformamide (DMF) as a solvent at a flow rate of 1.0 ml/min by using AS-8010, CO-8020, and columns (three GMHHR-H connected in series) manufactured by Tosoh Corporation and RID-10A manufactured by Shimadzu Corporation.

<Air permeability>

The air permeability was measured by using an air permeability tester (manufactured by Kumagai Riki Kogyo Co., Ltd.). The air permeability (s/100 mL) was calculated by multiplying the time (s) required for the gas to pass from 0 mL to 25 mL on the scale by 4.

<Coating film thickness>

The coating film thickness was measured by using a high-precision thickness measuring machine (HKT-1240). The film thickness of only the substrate before coating and the film thickness of the coated separator were measured, and the difference between the measured values was calculated as the coating film thickness.

<Area maintenance rate>

The separator created in each Experimental Example was placed in an oven and heated at 150°C for 30 minutes.

The area of the separator before and after heating was measured, and the area maintenance rate was calculated by the following calculation expression. A separator having a high area maintenance rate has excellent heat shrinkage resistance.

Area maintenance rate (%) = (area of separator after heating)/(area of separator before heating) $\times$ 100

<Synthesis Example 1>

245 g of HFE-347pc-f ($CF_3CH_2OCF_2CHF_2$), 9.7 g of N-vinyl-2-pyrrolidone, 35 g of tetrafluoroethylene, and 0.5 g of a hydrocarbon solution of 70% by weight of t-butyl peroxypivalate (hereinafter abbreviated as "Perbutyl PV") as an initiator were fed into an autoclave having a volume of 500 mL to carry out a polymerization reaction at 50°C. When the pressure decreased from 0.81 MPa to 0.71 MPa because of the polymerization reaction, the monomers in the autoclave were purged, and the resulting polymer solution was dried at 120°C to recover the copolymer (polymer a). Polymer a had a ratio of a polymerization unit based on tetrafluoroethylene/a polymerization unit based on N-vinyl-2-pyrrolidone of 38/62 (molar ratio) as measured by NMR measurement, and a weight average molecular weight of 320,000 as measured by GPC measurement.

<Synthesis Example 2>

245 g of HFE-347pc-f, 9.5 g of N-vinyl-2-pyrrolidone, 34 g of tetrafluoroethylene, and 1.0 g of Perbutyl PV as an initiator were fed into an autoclave having a volume of 500 mL to carry out a polymerization reaction at 50°C. When the pressure decreased from 0.77 MPa to 0.66 MPa because of the polymerization reaction, the monomers in the autoclave were purged, and the resulting polymer solution was dried at 120°C to recover the copolymer (polymer b). Polymer b had a ratio of a polymerization unit based on tetrafluoroethylene/a polymerization unit based on N-vinyl-2-pyrrolidone of 38/62 (molar ratio) as measured by NMR measurement, and a weight average molecular weight of 240,000 as measured by GPC measurement.

<Synthesis Example 3>

245 g of HFE-347pc-f, 7.4 g of N-vinyl-2-pyrrolidone, 38 g of tetrafluoroethylene, and 0.5 g of Perbutyl PV as an initiator were fed into an autoclave having a volume of 500 mL to carry out a polymerization reaction at 50°C. When the pressure decreased from 0.83 MPa to 0.73 MPa because of the polymerization reaction, the monomers in the autoclave were purged, and the resulting polymer solution was dried at 120°C to recover the copolymer (polymer c). Polymer c had a ratio of a polymerization unit based on tetrafluoroethylene/a polymerization unit based on N-vinyl-2-pyrrolidone of 41/59 (molar ratio) as measured by NMR measurement, and a weight average molecular weight of 320,000 as measured by GPC measurement.

<Synthesis Example 4>

245 g of HFE-347pc-f, 7.4 g of N-vinyl-2-pyrrolidone, 38 g of tetrafluoroethylene, and 1.0 g of Perbutyl PV as an initiator were fed into an autoclave having a volume of 500 mL to carry out a polymerization reaction at 50°C. When the pressure decreased from 0.90 MPa to 0.79 MPa because of the polymerization reaction, the monomers in the autoclave were purged, and the resulting polymer solution was dried at 120°C to recover the copolymer (polymer d). Polymer d had a ratio of a polymerization unit based on tetrafluoroethylene/a polymerization unit based on N-vinyl-2-pyrrolidone of 41/59 (molar ratio) as measured by NMR measurement, and a weight average molecular weight of 250,000 as measured by GPC measurement.

In the Examples and the Comparative Examples, the following copolymers were used.

Polymer a (formulation ratio: tetrafluoroethylene/N-vinyl-2-pyrrolidone = 38/62, weight average molecular weight: 320,000) Polymer b (formulation ratio: tetrafluoroethylene/N-vinyl-2-pyrrolidone = 38/62, weight average molecular weight: 240,000) Polymer c (formulation ratio: tetrafluoroethylene/N-vinyl-2-pyrrolidone = 41/59, weight average molecular weight: 320,000) Polymer d (formulation ratio: tetrafluoroethylene/N-vinyl-2-pyrrolidone = 41/59, weight average molecular weight: 250,000) Polymer e (formulation ratio: tetrafluoroethylene/N-vinyl-2-pyrrolidone = 33/67, weight average molecular weight: 97,000) Polymer f (formulation ratio: vinylidene fluoride/hexafluoropropylene = 93/7, weight average molecular weight: 320,000)

Example 1

Polymer a, an aluminum oxide (alumina) powder (average particle size of 0.67 μm), and N-methylpyrrolidone

(NMP) were blended in a container at a ratio of 12.2 parts by mass, 18.7 parts by mass, and 69.1 parts by mass, respectively, zirconia beads were added, these were mixed by using a bead mill, and then the zirconia beads were filtered out to prepare a composition for coating.

In addition, NMP/water was mixed at a ratio of 55/45 to obtain a phase-separated liquid. The composition for coating was applied to both sides of a polyethylene separator, and the resulting separator was immersed in the phase-separated liquid for 3 minutes. Next, the separator was immersed in water for 3 minutes and dried in an oven at 80°C for 30 minutes to produce a coated separator. The air permeability and the area maintenance rate of the produced separator were measured. Results are shown in Table 1.

Example 2

A separator was produced in the same manner as in Example 1 except that polymer b, an aluminum oxide (alumina) powder (average particle size of 0.67 μm), and N-methylpyrrolidone (NMP) were blended in a container at a ratio of 15.4 parts by mass, 23.1 parts by mass, and 61.5 parts by mass, respectively, to evaluate the obtained separator. Results are shown in Table 1.

Examples 3 and 4

By using each of polymers c and d alone, a separator was produced in the same manner as in Example 2, to evaluate the obtained separator. Results are shown in Table 1.

Example 5

Polymer e, an aluminum oxide (alumina) powder (average particle size of 0.67 μm), and N-methylpyrrolidone (NMP) were blended in a container at a ratio of 10.0 parts by mass, 15.0 parts by mass, and 75.0 parts by mass, respectively, and then a separator was produced in the same manner as in Example 1 to evaluate the obtained separator. Results are shown in Table 1.

Example 6

Polymer c, an aluminum oxide powder (average particle size of 0.54 μm), and N-methylpyrrolidone (NMP) were blended in a container at a ratio of 10.0 parts by mass, 15.0 parts by mass, and 75.0 parts by mass, respectively, and then a separator was produced in the same manner as in Example 1 to evaluate the obtained separator. Results are shown in Table 1.

Comparative Example 1

By using polymer f, a separator was produced in the same manner as in Example 5 to evaluate the obtained separator. Results are shown in Table 1.

Comparative Example 2

By using polymer f, a separator was produced in the same manner as in Example 6 to evaluate the obtained separator. Results are shown in Table 1.

Comparative Example 3

A polyethylene separator (uncoated original sheet) was evaluated in the same manner as in Example 1. Results are shown in Table 1.

[Table 1]

Table 1

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Polymer | a | b | c | d | e | c | f | f | - |
| inorganic filler | Alumina | Alumina | Alumina | Alumina | Alumina | Magnesium oxide | Alumina | Magnesium oxide | - |
| Air permeability (s/100 mL) | 420 | 440 | 430 | 370 | 440 | 420 | 390 | 400 | 200 |
| Coating film thickness | 7.0 μm | 8.8 μm | 9.6 μm | 8.3 μm | 6.6 μm | 7.5 μm | 8.7 μm | 7.4 μm | - |
| Area maintenance rate (%) | 44 | 49 | 69 | 55 | 30 | 59 | 12 | 10 | 8 |

## Claims

1. A composition for coating a separator for an electrochemical device, comprising a copolymer comprising a fluoromonomer unit and an amide bond-containing monomer unit.

2. The composition according to claim 1, wherein the fluoromonomer is at least one selected from the group consisting of tetrafluoroethylene, hexafluoropropylene, chlorotrifluoroethylene, and 2,3,3,3-tetrafluoropropene.

3. The composition according to claim 1 or 2, wherein the amide bond-containing monomer comprises a lactam ring.

4. The composition according to any one of claims 1 to 3, wherein the amide bond-containing monomer is N-vinyl-2-pyrrolidone.

5. The composition according to any one of claims 1 to 4, wherein a content of the fluoromonomer unit in the copolymer is 75 to 7 mol% based on all monomer units, and a content of the amide bond-containing monomer unit in the copolymer is 25 to 93 mol% based on all monomer units.

6. The composition according to any one of claims 1 to 5, further comprising an inorganic filler.

7. The composition according to any one of claims 1 to 6, further comprising an inorganic filler comprising at least one element selected from the group consisting of Mg, Al, Si, Ti, Zr, and Ba.

8. The composition according to any one of claims 1 to 7, wherein the composition further comprises an inorganic filler, and a content proportion of the copolymer to the inorganic filler, (copolymer): (inorganic filler), in terms of mass ratio is 0.1:99.9 to 49.9:50.1.

9. The composition according to any one of claims 1 to 8, further comprising a solvent.

10. A separator for an electrochemical device, comprising a substrate and a coating layer formed from the composition according to any one of claims 1 to 9.

11. The separator for an electrochemical device according to claim 10, wherein the substrate is formed from an organic material.

12. An electrochemical device comprising the separator for an electrochemical device according to claim 10 or 11.

13. A secondary battery comprising the separator for an electrochemical device according to claim 10 or 11.

## INTERNATIONAL SEARCH REPORT

International application No.
**PCT/JP2023/002879**

### A. CLASSIFICATION OF SUBJECT MATTER

***H01M 50/426***(2021.01)i; ***H01G 11/52***(2013.01)i; ***H01M 50/403***(2021.01)i; ***H01M 50/414***(2021.01)i; ***H01M 50/434***(2021.01)i; ***H01M 50/443***(2021.01)i; ***H01M 50/449***(2021.01)i
FI: H01M50/426; H01M50/449; H01M50/403 D; H01M50/443 M; H01M50/434; H01M50/414; H01G11/52

According to International Patent Classification (IPC) or to both national classification and IPC

### B. FIELDS SEARCHED

Minimum documentation searched (classification system followed by classification symbols)

H01M50/426; H01G11/52; H01M50/403; H01M50/414; H01M50/434; H01M50/443; H01M50/449

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-154802 A (KUREHA CORP) 04 October 2018 (2018-10-04) claims, paragraphs [0027]-[0030], [0041]-[0056], [0076]-[0083] | 1-2, 6-7, 9-13 |
| Y | claims, paragraphs [0027]-[0030], [0041]-[0056], [0076]-[0083] | 8-13 |
| A | entire text, all drawings | 3-5 |
| Y | WO 2020/246497 A1 (TEIJIN LTD) 10 December 2020 (2020-12-10) paragraphs [0059]-[0064] | 8-13 |
| A | entire text, all drawings | 1-7 |
| A | JP 11-329395 A (ALCATEL) 30 November 1999 (1999-11-30) entire text, all drawings | 1-13 |
| A | JP 2004-349240 A (DAIKIN IND LTD) 09 December 2004 (2004-12-09) entire text, all drawings | 1-13 |
| A | WO 2021/221113 A1 (DAIKIN IND LTD) 04 November 2021 (2021-11-04) entire text, all drawings | 1-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 April 2023** | **18 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/002879**

| C. DOCUMENTS CONSIDERED TO BE RELEVANT | | |
|---|---|---|
| Category* | Citation of document, with indication, where appropriate, of the relevant passages | Relevant to claim No. |
| A | WO 2020/054210 A1 (DAIKIN IND LTD) 19 March 2020 (2020-03-19)<br>entire text, all drawings | 1-13 |

Form PCT/ISA/210 (second sheet) (January 2015)

**INTERNATIONAL SEARCH REPORT**
**Information on patent family members**

International application No.
**PCT/JP2023/002879**

| Patent document cited in search report | Publication date (day/month/year) | Patent family member(s) | Publication date (day/month/year) |
|---|---|---|---|
| JP 2018-154802 A | 04 October 2018 | US 2020/0020909 A1 claims, paragraphs [0024]-[0027], [0039]-[0054], [0083]-[0094] | |
| | | WO 2018/173373 A1 | |
| | | EP 3605651 A1 | |
| | | CN 110383529 A | |
| | | KR 10-2019-0112095 A | |
| WO 2020/246497 A1 | 10 December 2020 | US 2022/0200098 A1 paragraphs [0102]-[0110] | |
| | | EP 3919269 A1 | |
| | | KR 10-2021-0136100 A | |
| | | CN 113678312 A | |
| JP 11-329395 A | 30 November 1999 | US 6261721 B1 ALL | |
| | | EP 951081 A1 | |
| | | FR 2777698 A1 | |
| JP 2004-349240 A | 09 December 2004 | US 2005/0233221 A1 ALL | |
| | | US 2009/0291369 A1 | |
| | | WO 2004/059664 A1 | |
| | | EP 1577900 A1 | |
| | | CA 2503028 A1 | |
| | | KR 10-2005-0092722 A | |
| | | CN 1729543 A | |
| WO 2021/221113 A1 | 04 November 2021 | CN 115461413 A ALL | |
| WO 2020/054210 A1 | 19 March 2020 | US 2021/0198453 A1 ALL | |
| | | EP 3851491 A1 | |
| | | CN 112639018 A | |
| | | KR 10-2021-0041605 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021221113 A
- WO 2020054210 A
- JP 2008524824 W